# EUROPÄISCHE PATENTANMELDUNG

(11) **EP 0 657 663 A1**
(43) Veröffentlichungstag der Anmeldung: **14.06.1995**
(21) Anmeldenummer: 94119086.0
(22) Anmeldetag: 03.12.1994
(51) Int. Cl.: F16H 15/42

(54) **Reibkegelgetriebe**

(30) Priorität: 13.12.1993 DE 4342422
(71) Anmelder: Rohs, Ulrich, Dr.-Ing., D-52351 Düren (DE)
(72) Erfinder: Rohs, Ulrich, Dr.-Ing., D-52351 Düren (DE)
(74) Vertreter: Rauh, Wolfgang K., Dipl.-Ing. Patentanwalt

(57) **Zusammenfassung**

Reibkegelgetriebe, bestehend aus auf parallelen Wellen umlaufenden, gegeneinander gerichteten Reibkegeln und einem die Reibkegel kraftschlüssig kuppelndem Übertragungsglied, wobei auf jeder Welle (1,2) mindestens zwei gleichgerichtete Reibkegel (3,4 und 5,6) angeordnet sind, wobei das Übertragungsglied (10) aus einem starren, zylindrischen, die Reibkegel (3,4,5,6) umfassenden Käfigkörper (7) besteht, der für jeden der hintereinander angeordneten Reibkegel (3,5 bzw. 4,6) einen mit ihm verbundenen Reibring (8 bzw.9) aufweist, dessen innere Mantelfläche axial geteilt ist und dessen Teilmantelflächen (11,12) jeweils mit der Achse des Käfigkörpers (7) Öffnungswinkel (β₁, β₂) einschließen, die den Öffnungswinkeln (β'₁ bzw. β'₂) der zugeordneten Reibkegel (3,4 bzw. 5,6) mit deren Drehachsen entsprechen, wobei das Übertragungsglied (10) ferner mit einer axial wirkenden Verstelleinrichtung (13,14) verbunden ist und wobei eine auf mindestens eine Welle (1,2) axial einwirkende, am Gehäuse abgestützte Anpreßeinrichtung vorgesehen ist.

## Beschreibung

Die Erfindung betrifft ein Reibkegelgetriebe.

Ein derartiges Getriebe ist seit langem Stand der Technik. (RAUH, Praktische Getriebelehre Bd.II, Bildband S.68 Springer-Verlag 1954) Hierbei ist das Ubertragungsglied ein zwischen den Mantelflächen der Reibkegel axial geführtes Reibrad. Ein solches Getriebe eignet sich wegen der Linienberührung zwischen den Reibkegeln und dem Ubertragungsglied und der damit geringen Ubertragungsfläche nicht zur Ubertragung großer Kräfte.

Ein anderes Reibkegelgetriebe ist aus der FR 829 332 bekannt. Hierbei werden auf zwei parallelen Wellen jeweils gleichgerichtete, aber von WEelle zu Welle entgegengesetzt ausgerichtete Reibkegel verwendet, die das Drehmoment über pneumatisch aufblasbare Ringe oder dgl. übertragen, die jeweils über zwei einander zugeordnete Reibkegel laufen und an einem starren Hohlzylinder befestigt sind, der die Reibkegel umschließt und axial verstellbar ist. Abgesehen davon, daß die nichtstarren Ringe keine kreisförmige Gestalt haben können, ist dieses Getriebe auch deshalb, wenn überhaupt, nur für sehr geringe Kraftübertragungen geeignet, weil keine axiale Abstützungseinrichtung für die Reibkegelwellen gegenüber dem Gehäuse vorgesehen ist.

Soweit derartige Abstützungseinrichtungen bekannt sind, z.B. aus der GB 343 225 bestehen sie allenfalls aus Federn, deren Abstützkraft ungenau und oft zu schwach ist, um höhere Drehmomente übertragen zu können.

Der vorliegenden Erfindung liegt die Aufgabe zugrunde, ein Reibkegelgetriebe zu schaffen, das imstande ist, große Drehmomente zu übertragen und doch relativ klein baut.

Die Lösung der gestellten Aufgabe besteht gemäß der Erfindung in den Merkmalen des Patentanspruches 1.

Die Verwendung eines die Reibkegel umgreifenden starren Reibringes ermöglicht wegen der guten Anschmiegung an die Reibkegel große Ubertragungsflächen und wegen des sehr geringen Bohrschlupfes sehr hohe Flächenpressungen. Diese gestatten die Ubertragung großer Drehmomente. Dabei müssen die Innenflächen des Reibringes entsprechend den Steigungen der Erzeugenden an den einander entgegengesetzt zugeordneten Reibkegeln angepaßt und geteilt sein.

Da bei einem Reibring ein sehr großes Kippmoment wirken würde, sieht die Erfindung die Reihenanordnung von mindestens zwei Paaren derartiger Getriebe vor, wobei die Reibringe durch einen Käfigkörper starr miteinander verbunden sind. Auf diese Weise wird erreicht, daß sich das Kippmoment des einen Reibringes auf den anderen abstützt, so daß das Kippmoment ohne Wirkungsgradverlust aufgenommen werden kann.

Das neue Reibkegelgetriebe hat nur ein einziges Ubertragungsglied. Es entfällt somit die synchrone Verstellung mehrerer Elemente, wie dies bei bekannten Getrieben, z.B. beim Schwenkscheibengetriebe mit sechs Übertragungselementen, erforderlich ist.

Das Ubertragungsglied benötigt auch keine Lagerung. Das Getriebe besitzt ferner keine Leistungshydraulik. Verluste können im Wesentlichen nur in den Wellenlagerungen und durch Schlupf an den Berührungsstellen zwischen den Reibelementen entstehen.

Infolge einer vorgesehenen drehmomentabhängigen Anspressung tritt in der Ubertragungsstelle kein Umfangsschlupf auf. Der vorhandene Bohrschlupf kann durch die konstruktive Auslegung sehr klein gehalten werden und ist in dieser Größenordnung sogar erwünscht. Es ergeben sich sehr hohe Ubertragungswirkungsgrade. Dies ist auf die zwangläufige Ausgestaltung der Abstützeinrichtung zwischen der Reibkegelwelle und dem Gehäuse zurückzuführen.

Die Unteransprüche betreffen weitere vorteilhafte Ausgestaltungen der Erfindung.

In der Zeichnung ist das erfindungsgemäße Reibkegelgetriebe näher erläutert. Es zeigen:
- Fig.1: eine schematische Darstellung des erfindungsgemäßen Reibkegelgetriebes im Längsschnitt,
- Fig.2: eine abgewandelte Ausführung des Reibkegelgetriebes,
- Fig.3: eine Anpreßeinrichtung nach der Erfindung im Längsschnitt
- Fig.4: eine schematische teilweise Seitenansicht,
- Fig.5: eine Kräftedarstellung an der Anpreßeinrichtung,
- Fig.6: ein Reibkegelgetriebe für ein Kraftfahrzeug und
- Fig.7: einen schematischen Querschnitt nach der Linie VII-VII in Fig.3

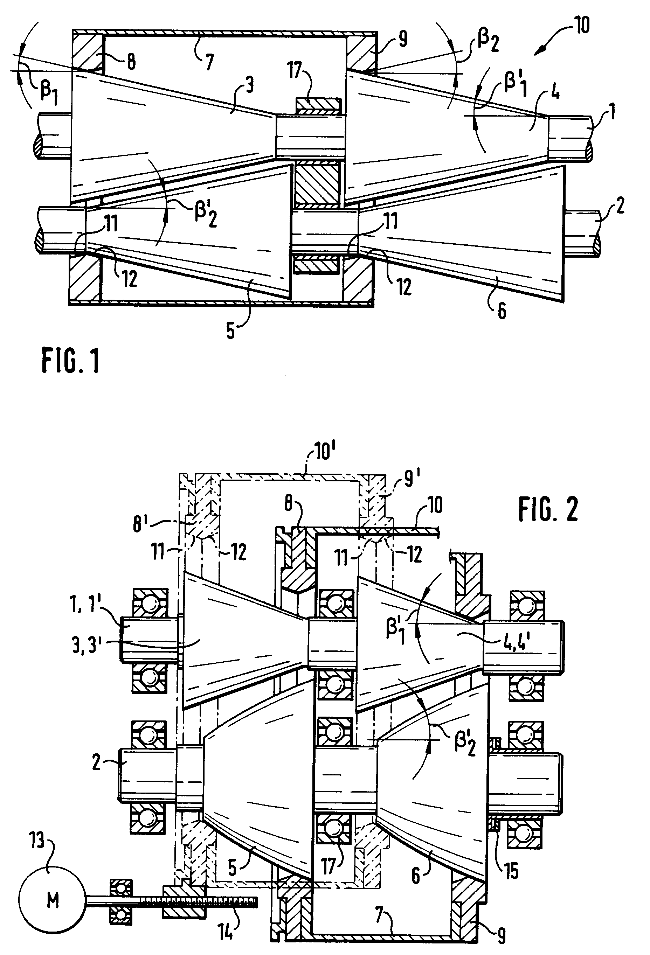

Fig.1 zeigt schematisch ein Reibkegelgetriebe nach der Erfindung. Es besteht jeweils aus auf zueinander parallelen Wellen 1,2 angeordneten zueinander entgegengesetzt ausgerichteten Reibkegelreihen mit zueinander gleichgerichteten Reibkegeln 3,4 bzw. 5,6 und einem die Reibkegelpaare 3,5 und 4,6 kraftschlüssig verbindenden Ubertragungsglied 10. Wie die Zeichnung zeigt, sind die Reibkegel 3,4 der einen Welle 1 entgegengesetzt zu den auf der Welle 2 sitzenden Reibkegeln 5,6 angeordnet.

Das Ubertragungsglied 10 besteht aus einem starren, zylindrischen Käfigkörper 7, der die Reibkegel 3 bis 6 umfaßt, sowie einen jedem Reibkegelpaar 3,5 bzw. 4,6 zugeordneten, starren Reibring 8 bzw. 9.

Die innere Mantelfläche jedes Reibringes 8,9 ist axial geteilt. Diese Teilmantelflächen 11,12 schließen mit der Achse des Käfigkörpers 7 jeweils einen Winkel β₁, β₂ ein, die den Öffnungswinkeln β'₁, β'₂ der Reibkegel 3,4 bzw. 5,6 mit deren Drehachsen gleich sind.

Das Ubertragungsglied 10 ist axial verschiebbar angeordnet und mit einer nicht dargestellten Verstelleinrichtung verbunden. (Fig.2)

Im Betrieb übeträgt das Ubertragungsglied 10 ein Drehmoment im Verhältnis der Reibkegeldurchmesser an der Angriffsstelle des Ubertragungsgliedes 10.

Fig.2 zeigt eine weitere Ausführungsform im schematischen Längsschnitt. Hierbei haben die Reibkegel 3,4 der Antriebsstufe eine andere Form bzw. andere Öffnungswinkel β als die Reibkegel 5,6 der Abtriebsstufe.

Die Verstellung des Ubersetzungsverhältnisses erfolgt durch axiale Verschiebung des Übertragungsgliedes 10. Bei konstantem Übersetzungsverhältnis ist das Ubertragungsglied 10 von äußeren Kräften frei, so daß zur Ubersetzung nur die durch die Verstellung bedingten Kräfte aufzubringen sind. Die Verstellung erfolgt hierbei mittels eines kleinen Elektromotors 13 über eine Gewindespindel 14 oder einen Schwenkarm. Der Elektromotor kann von einer elektronischen Steuerung angesteuert sein. Die Übertragung der Verstellbewegung auf das Ubertragungsglied 10 erfolgt durch eine Art Schaltgabel, die hier nicht dargestellt ist.

Zwischen den Reibkegeln 3,4 bzw. 5,6 einer Reibkegelreihe ist jeweils ein Zwischenlager 17 angeordnet, das die An- und Abtriebswellen 1,2 verbindet und auf Abstand hält. Dieses Zwischenlager muß die dort auftretenden, sehr hohen Radialkräfte aufnehmen. Es ist nicht mit dem Gehäuse 18 verbunden.

Die für die Drehmomentübertragung erforderliche Anpreßkraft ist proportional dem Drehmoment der Abtriebswelle. Sie wird durch axiales Verschieben mindestens einer Welle 1,2 z.B. mittels einer zwangläufigen, starren Abstützeinrichtung 15 erreicht, die noch beschrieben wird. Dann kann auf eine hydraulische Anpressung verzichtet werden.

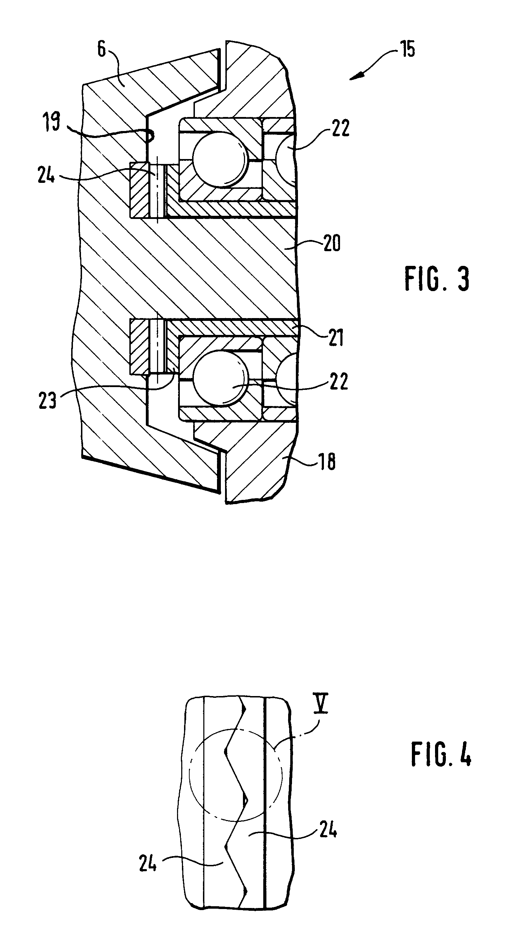

Die Anpreßeinrichtung 15 ist in den Fig.3 bis 5 dargestellt und erläutert. Fig.3 zeigt im Längsschnitt das weitere Ende des Reibkegels 6, dessen Stirnseite 19 als Einsenkung ausgebildet ist und einen Wellenstummel 21 trägt. Dieser ist in einer Verlängerungswelle 21 aufgenommen, die ihrerseits mittels Radial- und Drucklagern 22 gegenüber dem Gehäuse 18 abgestützt ist. An der dem Reibkegel 6 zugewandten Seite ist die Verlängerungswelle 21 als eine den Wellenstummel 20 aufnehmende Büchse mit einem Bund 23 ausgebildet. Dieser Bund 23 trägt auf seiner Stirnseite das eine Teil einer Schrägnockenkupplung 24. Das andere Teil dieser Schrägnockenkupplung 24 ist in der Stirnfläche 19 des Reibkegels 6 eingesetzt.

Die schrägen Nocken dieser klauenkupplungähnlichen Verbindung beirken eine zwangläufige unmitztelbare Ubertragung des Drehmomentes bei gleichzeitigerdirekter, zwangläufiger axialer Abstützung des Reibkegels 6 und seiner Welle am Gehäuse 18.

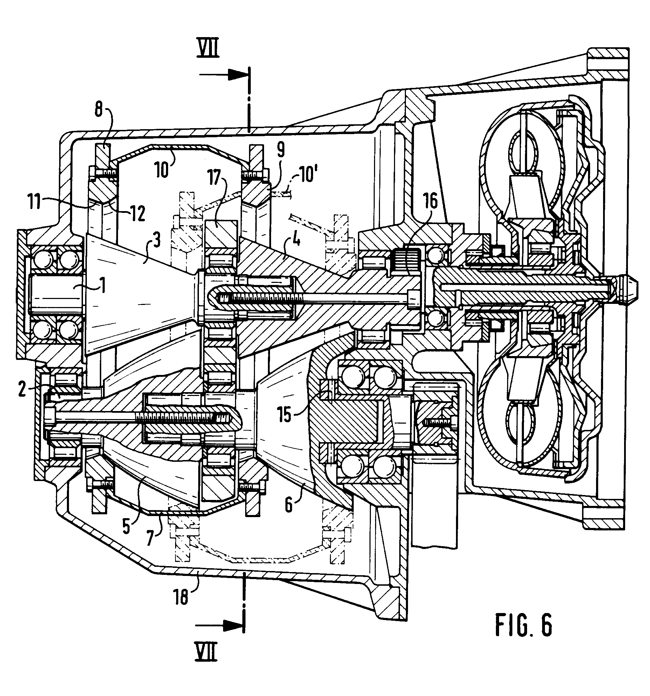

Fig.5 zeigt schematisch für den Teil V in Fig.4, wie die relativ geringe Umfangskraft F_{U} eine verstärkte axiale Anpreßkraft F_{P} gegen das Gehäuse bewirkt.

Fig.2 zeigt die Stellung des Ubertragungsgliedes 10 bzw. 10' in ihren jeweiligen Totpunkten. Dabei weist dieses Getriebe zwei parallele Wellen 1,1' auf, die auf einer gemeinsamen horizontalen Ebene liegen und mit der Welle 2 ein Dreieck einschließen. Die Anpressung der Reibkegel 3-6 gegen das Ubertragungsglied 10 erfolgt über die Abstützeinrichtung 15 an der Welle 2.

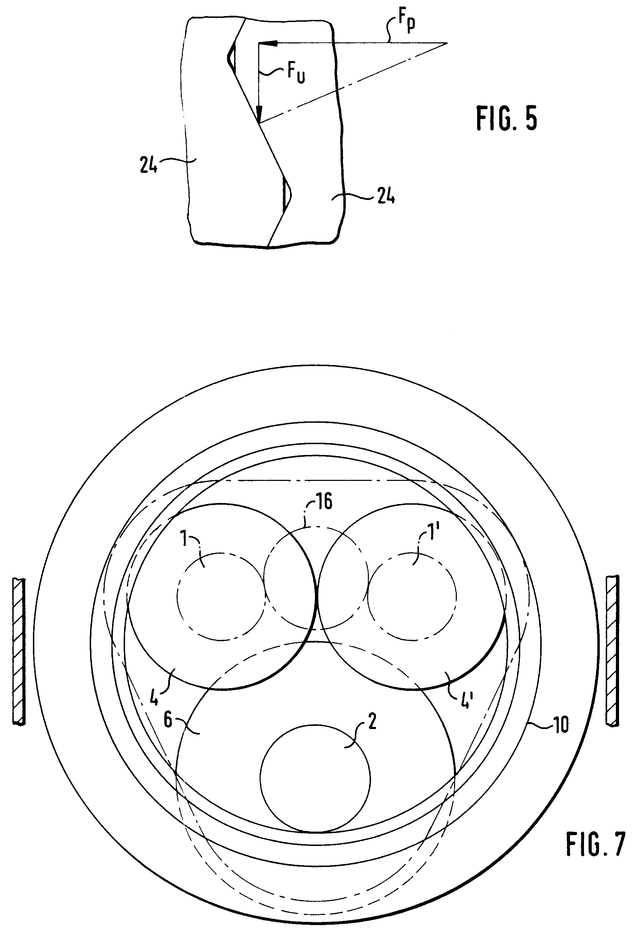

Die Fig.6 und 7 zeigen ein Anwendungsbeispiel eines dreiachsigen Reibkegelgetriebes nach der Erfindung bei einem PKW-Antrieb im Längs- und Querschnitt.

Die beiden Antriebswellen 1,1' werden durch ein gemeinsames Zwischenrad 16 in Gleichlauf gehalten. Das Ubertragungsglied 10 umschließt mit seinen Reibringen 8 bzw.9 jeweils drei Reibkegel 3,3',5 bzw. 4,4',6. Hierdurch wird sichergestellt, daß das Ubertragungsglied 10 radial exakt geführt werden kann. Im übrigen ergibt sich eine sehr kompakte Bauweise, die sich besonders für frontgetriebene PKW-Antriebe eignet.

Vorteilhaft sind die Käfigkörper 7 öldicht ausgeführt. Vor den offenen Reibringen 8,9 sind (nicht dargestellte) Schmiermittelzuführungen angeordnet. Das Schmiermittel gelangt in das Innere des Käfigkörpers 7 und von dort zu den Zwischenlagern 16 und den Reibringen 8,9.

## Patentansprüche

1. Reibkegelgetriebe, bestehend aus auf parallelen Wellen umlaufenden, gegeneinander gerichteten Reibkegeln und einem die Reibkegel kraftschlüssig kuppelndem Ubertragungsglied,
wobei auf jeder Welle (1,2) mindestens zwei gleichgerichtete Reibkegel (3,4 bzw.5,6) angeordnet sind, und das Ubertragungsglied (10) aus einem starren, zylindrischen, die Reibkegel (3,4,5,6) umfassenden Käfigkörper (7) besteht, der für jeden der hintereinander angeordneten Reibkegel (3,5 bzw.4,6) einen mit ihm verbundenen Reibring (8 bzw.9) aufweist,
wobei ferner die innere Mantelfläche jedes Reibringes (8,9) axial geteilt ist und diese Teilmantelflächen (11,12) jeweils mit der Achse des Käfigkörpers (7) Offnungswinkel (β₁, β₂) einschließen, die den Offnungswinkeln (β'₁, β'₂) der zugeordneten Reibkegel (3,4 bzw.5,6) mit deren Drehachsen entsprechen,
wobei das Ubertragungsglied (10) mit einer axial wirkenden Verstelleinrichtung (13,14) verbunden ist und
wobei eine auf mindestens eine Welle (1,2) axial einwirkende, am Gehäuse abgestützte, zwangläufige und drehmomentenabhängige Anpreßeinrichtung (15) vorgesehen ist.

2. Reibkegelgetriebe nach Anspruch 1, **dadurch gekennzeichnet**, daß die Öffnungswinkel (β'₁ bzw. β'₂) der Reibkegel (3,4 bzw. 5,6) ungleich sind.

3. Reibkegelgetriebe nach Anspruch 1 oder 2, **dadurch gekennzeichnet**, daß mehr als eine gleichgerichtete Reibkegelreihe (3,4; 3',4') auf parallelen Wellen (1,1') in der einen Richtung und mindestens eine weitere Reibkegelreihe (5,6) in entgegengesetzter Richtung ausgerichtet sind und daß jeweils mindestens drei zueinander parallel umlaufende Reibkegel (3,3',5 bzw. 4,4',6) durch einen gemeinsamen Reibring (8 bzw.9) des Ubertragungsgliedes (10) kraftschlüssig miteinander verbunden sind.

4. Reibkegelgetriebe nach Anspruch 3, **dadurch gekennzeichnet**, daß die beiden in der gleichen Richtung ausgerichteten Reibkegelreihen (3,4; 3',4') mit der Antriebswelle verbunden sind und gleichläufig umlaufen.

5. Reibkegelgetriebe nach einem der Ansprüche 1 bis 4, **dadurch gekennzeichnet**, daß die Reibkegel (3,4; 5,6) mindestens einer Antriebsstufe (Antriebs und/oder Abtriebswelle (1,2) ein nichtlineares Längsschnittprofil haben.

6. Reibkegelgetriebe nach einem der Ansprüche 1 bis 5, **dadurch gekennzeichnet**, daß zwischen den Reibkegeln (3,4; 5,6) jeder Reibkegelreihe mit jeder Welle (1,2) verbundene, als Abstandhalter wirkende, nicht mit dem Gehäuse verbundene Zwischenlager (17) vorgesehen sind.

7. Reibkegelgetriebe nach einem der Ansprüche 1 bis 6, **dadurch gekennzeichnet**, daß die Anpreßeinrichtung eine Schrägnockenkupplung ist.

8. Reibkegelgetriebe nach einem der Ansprüche 1 bis 7, **dadurch gekennzeichnet**, daß die Käfigkörper (7) öldicht ausgebildet sind und daß vor den Reibringen (8 bzw.) axiale Schmiermittelzuführungen vorgesehen sind.
